(19) **Europäisches Patentamt**
**European Patent Office**
**Office européen des brevets**

(11) **EP 3 625 094 B1**

(12) **EUROPÄISCHE PATENTSCHRIFT**

(45) Veröffentlichungstag und Bekanntmachung des Hinweises auf die Patenterteilung:
**08.06.2022 Patentblatt 2022/23**

(21) Anmeldenummer: **18719487.3**

(22) Anmeldetag: **13.04.2018**

(51) Internationale Patentklassifikation (IPC):
**B60T 8/17** *(2006.01)* **B60T 8/172** *(2006.01)*

(52) Gemeinsame Patentklassifikation (CPC):
**B60T 8/172; B60T 8/1708;** B60T 2250/02

(86) Internationale Anmeldenummer:
**PCT/EP2018/059507**

(87) Internationale Veröffentlichungsnummer:
**WO 2018/215135 (29.11.2018 Gazette 2018/48)**

(54) **VERFAHREN ZUR SCHÄTZUNG DER ERREICHBAREN GESAMTBREMSKRÄFTE ZUR AUTOMATISIERTEN VERZÖGERUNG EINES NUTZFAHRZEUGS, BREMSANLAGE SOWIE NUTZFAHRZEUG DAMIT**

METHOD FOR ESTIMATING THE ACHIEVABLE TOTAL BRAKING FORCES FOR THE AUTOMATED DECELERATION OF A UTILITY VEHICLE, BRAKING SYSTEM AND UTILITY VEHICLE HAVING SAID BRAKING SYSTEM

PROCÉDÉ POUR ÉVALUER LES FORCES DE FREINAGE TOTAL ATTEIGNABLES AFIN DE FAIRE DÉCÉLÉRER AUTOMATIQUEMENT UN VÉHICULE UTILITAIRE, SYSTÈME DE FREINAGE ET VÉHICULE UTILITAIRE EN ÉTANT POURVU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2017 DE 102017004885**

(43) Veröffentlichungstag der Anmeldung:
**25.03.2020 Patentblatt 2020/13**

(73) Patentinhaber: **ZF CV Systems Europe BV**
**1170 Brussels (BE)**

(72) Erfinder: **WIEHEN, Christian**
**30938 Burgwedel (DE)**

(74) Vertreter: **Rabe, Dirk-Heinrich**
**ZF CV Systems Hannover GmbH**
**Am Lindener Hafen 21**
**30453 Hannover (DE)**

(56) Entgegenhaltungen:
WO-A1-03/011669  DE-A1- 3 909 588
DE-A1- 4 310 422  DE-A1- 19 517 708
DE-C1- 4 210 576  US-A- 5 415 466

**Beschreibung**

Die Erfindung betrifft ein Verfahren zur Schätzung der erreichbaren Gesamtbremskräfte zur automatisierten Verzögerung eines Nutzfahrzeugs oder einer Fahrzeugkombination mit mehreren Achsen gemäß Anspruch 1. Die Erfindung betrifft außerdem gemäß Anspruch 8 eine Bremsanlage zur Durchführung des Verfahrens sowie gemäß Anspruch 10 ein Nutzfahrzeug oder eine Fahrzeugkombination mit einer solchen Bremsanlage.

Bei modernen Nutzfahrzeug werden zunehmend automatisierte Bremssysteme eingesetzt, beispielsweise fortschrittliche Notbremssysteme (AEBS = "advanced emergency braking system"), Fahrerassistenzsysteme wie elektronische Stabilitätskontrollen (ESC), wobei die Bremsanlage über eine elektronische Bremssteuereinheit unabhängig von Fahrerbremsungen bedarfsweise automatisiert das Fahrzeug verzögert. Von besonderer Bedeutung ist dabei die möglichst genaue Kenntnis der zur Verfügung stehenden Gesamtbremskraft des Nutzfahrzeugs.

Dies gilt in besonderem Maße für das sogenannte Platooning, wobei mehrere Nutzfahrzeuge oder Fahrzeugkombinationen im Straßenverkehr mit Hilfe einer koordinierenden Steuerung mit möglichst geringem Abstand hintereinander fahren, um den Kraftstoffverbrauch zu verringern. Die Nutzfahrzeuge des Platoons sind miteinander vernetzt oder weisen Einrichtungen zur Abstandmessung wie RADAR oder LIDAR auf, welche der Einstellung möglichst geringer Abstände zum vorausfahrenden Fahrzeug dienen, ohne dass die Verkehrssicherheit beeinträchtigt wird. Die vernetzten Nutzfahrzeuge im Platoon benötigen aufgrund kurzer Reaktionszeiten der automatisierten Verzögerung einen deutlich geringeren Abstand als bei manueller Fahrzeugführung, wodurch sich der Luftwiderstand erheblich reduziert.

Um den Abstand jedoch so gering wie möglich zu halten ist eine möglichst genaue Kenntnis des minimal benötigten Sicherheitsabstands erforderlich, welcher maßgeblich von der maximal verfügbaren Bremskraft eines Nutzfahrzeugs oder einer Fahrzeugkombination im Platoon abhängt. Die erreichbaren Gesamtbremskräfte eines Nutzfahrzeugs oder einer Fahrzeugkombination hängen von einer Vielzahl von Faktoren ab, insbesondere dem Bremsenkennwert der Radbremsen, welcher die Abhängigkeit des von der Radbremse aufgebrachten Bremsmoments von dem aufgebrachten Bremsdruck repräsentiert. Neben diesem Bremsenkennwert haben auch konstruktiv gegebene Eigenschaften einzelner Bremsen und auch Reifen sowie die Fahrbahnreibung Einfluss auf die erreichbaren Bremskräfte.

DE 10 2008 061 944 A1 offenbart ein Verfahren zur Ermittlung genauer Bremsenkennwerte, welche zur Bestimmung des jeweiligen Ansprechdrucks einer Bremse herangezogen werden. Mit den Bremsenkennwerten soll der Regelungsaufwand zur Korrektur des eingesteuerten Bremsdrucks an einer jeweiligen Bremse reduziert werden. Bei dem bekannten Verfahren wird nach Erfassen einer Bremsanforderung der Bremsdruck an den Bremsen einer ersten Achse verändert, während an allen Bremsen der anderen Achsen der Bremsdruck konstant gehalten wird oder kein Bremsdruck angelegt wird. Außerdem wird ein Bewegungskennwert erfasst, welcher eine Verzögerung eines Zugfahrzeugs bzw. eines Fahrzeugzuges anzeigt. Aus dem Bewegungskennwert sowie dem Bremsdruck an den Bremsen der ersten Achse wird ein Bremsenkennwert berechnet, gegebenenfalls unter Berücksichtigung der aktuellen Bremstemeratur.

Die US5415466A offenbart ein großes Gelenkfahrzeug, wie beispielsweise ein Sattelzug mit Sattelzugmaschine, und weist eine Anzahl von Bremsstellen auf, die jeweils eine Anzahl von Bremsstellen aufweisen. Um die an den verschiedenen Bremsstellen beim Abbremsen des Fahrzeugs geleistete Arbeit richtig auszugleichen, müssen die relativen Bremsfaktoren jeder Bremsstelle bestimmt werden. Die Bremsfaktoren charakterisieren die Bremsleistung für einen bestimmten abgegebenen Bremsdruck. Ein System und ein Verfahren zum Bestimmen der relativen Bremsfaktoren für ein solches Fahrzeug wird bereitgestellt. Das Fahrzeug wird mit einer bekannten Geschwindigkeit abgebremst, während der abgegebene Bremsdruck für jeden Bremsort gemessen und aufgezeichnet wird. Ein System simultaner Gleichungen wird dann gelöst, um die relativen Bremsfaktoren zu bestimmen. Sobald die Bremsfaktoren während einer Folge von kontrollierten Bremsereignissen bestimmt wurden, kann das nachfolgende Bremsen modifiziert werden, um einen arbeitsausgeglichenen Bremsmodus zu erreichen.

Die DE4310422A1 offenbart ein Verfahren zur Bestimmung des Anlegedrucks an den Bremsen eines Kraftfahrzeugs, um die masseunabhängigen Anlegedrücke an den Rädern und/oder Achsen zu bestimmen.

Die DE19517708A1 offenbart eine Vorrichtung und ein Verfahren zur elektrischen Steuerung der Bremsanlage eines Fahrzeugs, wobei abhängig vom Bremswunsch des Fahrers zur Bremsbetätigung Bremskraft in den Radbremsen der Bremsanlage des Fahrzeugs auf- oder abgebaut wird und während des Bremsvorgangs aus Betriebsgrößen der Bremsanlage und des Fahrzeugs Bremsenkennwerte ermittelt werden, wobei während eines oder mehrerer Bremsvorgänge die Bremsenkennwerte der Bremsen der Bremsanlage sowie der Beginn und/oder das Ende der Bremswirkung der Radbremsen der Bremsanlage ermittelt werden.

Die DE3909588A offenbart ein Verfahren zur Bestimmung des Bremsmoments wenigstens eines Fahrzeugrads, wobei in einem Bremsintervall die Bremsdrücke an den Rädern des Fahrzeugs und die Radgeschwindigkeiten am Anfang und Ende des Bremsintervalls gemessen werden, so dass daraus eine Proportionalitätskonstante ermittelt werden kann.

Das Aufzeichnen von erreichten Bremskräften während der Fahrt des Nutzfahrzeugs stellt regelmäßig keine verlässlichen Informationen zur maximalen Verzögerung bereit, da hierfür die Durchführung einer Vollbremsung erforderlich wäre. Eine Messung der aktuell erreichbaren Gesamtbremskräfte könnte grundsätzlich zwar durch Bremsversuche ermittelt werden, der Aufwand zur Messung der erreichbaren Gesamtkräfte ist jedoch aufwendig und müsste häufig durchgeführt werden, beispielsweise nach jeder Änderung des Beladungszustands des Nutzfahrzeugs oder einer Fahrzeugkombination. Da dies kaum praktikabel ist, bleiben die erreichbaren Gesamtbremskräfte, insbesondere die maximal erreichbare Bremskraft eines Nutzfahrzeugs oder einer Fahrzeugkombination, unbekannt. Das Potential des Platoonings zur Reduzierung des Kraftstoffverbrauchs kann ohne verlässliche Informationen zu den erreichbaren Gesamtbremskräften nicht ausgeschöpft werden.

Der vorliegenden Erfindung liegt die Aufgabe zugrunde, die erreichbaren Gesamtkräfte zur Verzögerung eines Nutzfahrzeugs oder einer Fahrzeugkombination mit mehreren Achsen im laufenden Betrieb möglichst genau zu schätzen.

Diese Aufgabe wird erfindungsgemäß durch ein Verfahren zur Schätzung der erreichbaren Gesamtkräfte zur automatisierten Verzögerung mit den Merkmalen des Anspruchs 1 gelöst. Die Erfindung wird außerdem gemäß Anspruch 8 durch eine Bremsanlage zur Durchführung des Verfahrens und gemäß Anspruch 10 durch ein Nutzfahrzeug oder eine Fahrzeugkombination mit einer derartigen Bremsanlage gelöst.

Erfindungsgemäß werden in Schätzbremsungen für einzelne Bremseneinheiten, welche aus mindestens einer der Radbremsen bestehen, Bremsenkennwerte als Verhältnis der Teilbremskraft und dem dafür eingestellten Bremsdruck unter Berücksichtigung der aktuellen, der dabei erreichten, Verzögerung des Nutzfahrzeugs beziehungsweise der Fahrzeugkombination in der nachstehend beschriebenen Weise ermittelt. Unter einem Nutzfahrzeug wird dabei ein Kraftfahrzeug verstanden, welches nach seiner Bauart für den Transport von Gütern (beispielsweise Lastkraftwagen, Zugfahrzeug und dergleichen) oder den Transport von Personen (beispielsweise Omnibusse) oder aber zum Ziehen von Anhängern bestimmt ist. Eine Fahrzeugkombination umfasst ein motorisiertes Zugfahrzeug und wenigstens ein Anhängefahrzeug.

Vorteilhaft werden die Bremsenkennwerte für Bremseneinheiten mit Radbremsen einzelner Achsen oder Gruppen von Achsen ermittelt, so dass bei der Schätzbremsung stabile Bremsverhältnisse vorherrschen. Ist die Stabilität des Nutzfahrzeugs oder des Fahrzeuggespanns in einer konkreten Bremssituation nicht gefährdet, können in einer Ausführungsform der Erfindung auch einzelne Radbremsen als Bremseneinheit im erfindungsgemäßen Sinn bewertet werden, beziehungsweise ein Bremsenkennwert für eine aktive Radbremse und die mit dieser Radbremse erreichbaren Gesamtkräfte geschätzt werden. Die Radbremsen von Gruppen von Achsen werden als Bremseneinheiten im erfindungsgemäßen Sinn bewertet, insbesondere bei Ausführungsformen, bei denen die Radbremsen mehrerer Achsen in einem gemeinsamen Bremskreis, beispielsweise über denselben Druckmodulator angesteuert werden. Die aktuelle Verzögerung wird aus Messwerten ermittelt, beispielsweise aus den Messwerten eines Beschleunigungssensors. Der Beschleunigungssensor ist dabei der Bremssteuereinheit derart zugeordnet, dass die Bremssteuereinheit Zugriff auf die Messwerte des Beschleunigungssensors hat oder bereits ausgewertete Information zur aktuellen Verzögerung empfängt. In einer Ausführungsform der Erfindung werden Messwerte des Beschleunigungssensors eines Sensormoduls für die Stabilitätsregelung des Fahrzeugs herangezogen.

In einer vorteilhaften Ausführungsform wird die aktuelle Verzögerung aus den Messwerten von Drehzahlsensoren der Räder hergeleitet, so dass auf vorhandene Sensorhardware der Bremsanlage zurückgegriffen ist.

Schätzbremsungen sind Verzögerungsvorgänge mit Umsetzung einer zur Verzögerung des Nutzfahrzeugs angeforderten Bremskraft, bei denen die angeforderte Bremskraft durch jeweils eine allein aktive Bremseneinheit wenigstens teilweise aufgebracht wird. Eine elektronische Steuereinheit der Bremsanlage ist dabei derart konfiguriert und ausgebildet, dass zur Durchführung der Schätzbremsungen einzelne Bremseneinheiten, also vorzugsweise die Radbremsen einzelner Achsen oder Gruppen von Achsen separat aktivierbar sind, also zur Umsetzung der Bremskraftanforderung unabhängig von den anderen Bremseneinheiten ansteuerbar sind. Der Erfindung liegt dabei die Erkenntnis zugrunde, dass die Leistungsfähigkeit der gesamten Bremsanlage bei höheren Bremsdrücken aus Sicherheitsgründen nicht erfasst werden kann, jedoch bei einer Durchführung von Schätzbremsungen mit lediglich einer aktiven Bremseneinheit diese Bremseneinheit zur Umsetzung der Bremskraftanforderung in einem Betriebspunkt mit höherem Bremsdruck arbeitet und so eine Schätzung, das heißt eine näherungsweise Bestimmung, der Teilbremskraft dieser Bremseneinheit bei gemeinsamer Betätigung mehrerer Radbremsen möglich ist. Mit einer Schätzung der jeweiligen Teilbremskräfte auch für höhere Bremsanforderungen sind nämlich Rückschlüsse auf die gemeinsame Leistungsfähigkeit der Bremseneinheiten möglich.

Zur Bestimmung der erreichbaren Teilbremskräfte einer Bremseneinheit geht die Erfindung zunächst davon aus, dass sich das Bremsmoment einer Radbremse grundsätzlich proportional verhält zu dem aktuellen Wert der Stellgröße, welche zur Betätigung der Radbremse eingestellt ist, beispielsweise der aktuelle Bremsdruck. Die Proportion ist maßgeblich von einem Bremsenkennwert geprägt, welcher das Verhältnis der Teilbremskraft und der dafür eingestellten Stellgröße repräsentiert.

Vorteilhaft werden die Radbremsen pneumatisch oder hydraulisch betätigt, wobei der Bremsdruck die Stellgröße ist. Entsprechend charakterisiert der Bremsenkennwert der Radbremse das Verhältnis des von der Radbremse generierten Bremsmoments zu dem dafür zwecks Betätigung aufgebrachten Bremsdruck. Mit einer hydraulischen Betätigung der Radbremsen lassen sich mit hoher Stellgenauigkeit hohe Bremsmomente und Bremskräfte einstellen. In einer weiteren vorteilhaften Ausführungsform sind elektromechanische Radbremsen vorgesehen. In der bevorzugten Ausführungsform werden die Radbremsen über ein pneumatisches Betätigungssystem in Betrieb genommen, wobei leistungsloses Druckhalten bei konstanter Kraft möglich ist und kleinere Leckagen keine Umweltbelastungen verursachen. Ferner sind pneumatische Bremssysteme vergleichsweise einfach aufgebaut und zudem in der Regel kostengünstiger als vergleichbare elektromechanische Bremssysteme.

Bei der erfindungsgemäßen Schätzung der verfügbaren Bremskräfte wird zur Ermittlung des Bremsenkennwerts vorteilhaft auch ein jeweiliger Konstruktionsbeiwert berücksichtigt, welcher die bauartbedingte Charakteristik der beteiligten Radbremsen repräsentiert, beispielsweise die Hebelverhältnisse. Dieser Konstruktionsbeiwert ändert sich mit Betrieb der Bremsanlage nicht und wird im Voraus ermittelt und der erfindungsgemäßen Schätzung vorgegeben. Für das Bremsmoment an der Radbremse ergibt sich somit folgender Zusammenhang:

$$M_B = P \times C_{des} \times C_L.$$

Dabei bezeichnet

$M_B$ Bremsmoment
P Bremsdruck (Stellgröße)
$C_D$ Konstruktionsbeiwert
$C_L$ Bremsenkennwert.

Die Erfindung hat weiter erkannt, dass sich der Bremsenkennwert, welcher das Verhältnis der Teilbremskraft und der dafür eingestellten Stellgröße (wie Bremsdruck) repräsentiert, alternativ bestimmen lässt und sieht vor, aus dem so bestimmbaren Bremsenkennwert die erreichbaren Teilbremskräfte zu ermitteln. Die Bestimmung der erreichbaren Teilbremskräfte erfolgt dabei in jeweiligen Schätzbremsungen, so dass durch die Bildung der Summe der erreichbaren Teilbremskräfte Gesamtbremskräfte aller Radbremsen geschätzt werden können, ohne diese jedoch für die Schätzung gemeinsam betätigen zu müssen.

Gemäß der Erfindung wird der Bremsenkennwert unter Berücksichtigung der aktuellen Verzögerung sowie einer ermittelten oder vorgegebenen Gesamtmasse des Nutzfahrzeugs oder der Fahrzeugkombination ermittelt. Unter Berücksichtigung der Gleichwertigkeit von Bremsmoment und dem Produkt aus Bremskraft und dynamischem Rollradius ($F_B = M_B / r_{dyn}$) lässt sich der Bremsenkennwert der aktiven Bremseneinheit nach der folgenden Gleichung ermitteln:

$$C_L = b \times m_{tot} \times r_{dyn} / P \times c_d$$

In dieser Gleichung bezeichnet

b aktuelle Verzögerung
$m_{tot}$ Gesamtmasse des Fahrzeugs oder der Fahrzeugkombination
$r_{dyn}$ dynamischer Rollradius.

Aus dem so ermittelten Bremsenkennwert ($C_{L1}$, $C_{L2}$, $C_{L3}$, $C_{L4}$) wird erfindungsgemäß ein Rückschluß auf die von der jeweiligen Bremseneinheit (24) erreichbaren Teilbremskräfte ($F_{B1}$, $F_{B2}$, $F_{B3}$, $F_{B4}$) gezogen gemäß folgendem Zusammenhang:

$$F_{B,n} = P \times C_{D,n} \times C_{L,n} / r_{dyn,n}$$

Dabei bezeichnet

$F_B$ erreichbare Teilbremskraft
n laufende Nummer einer Bremseneinheit.

Unter Berücksichtigung der ermittelten Bremsenkennwerte lässt sich somit die erreichbare Teilbremskraft einer jeden Bremseneinheit in Abhängigkeit des Bremsdrucks bestimmen, das heißt die erreichbare Teilbremskraft für jedes mögliche Niveau des Bremsdrucks zwischen einem Minimum und einem Maximum schätzen. Eine genaue Schätzung der erreichbaren Teilbremskräfte einer während der Schätzbremsung aktiven Bremseneinheit ist möglich, wenn die aktuelle Gesamtmasse des Fahrzeugs oder der Fahrzeugkombination berücksichtigt wird, welche im laufenden Betrieb gemessen wird. Es werden dadurch unterschiedliche Beladungszustände und damit unterschiedliche Achslasten bei der Schätzung der erreichbaren Gesamtbremskräfte zur automatisierten Verzögerung des Nutzfahrzeugs oder der Fahrzeugkombination berücksichtigt.

Die Genauigkeit der Schätzung der erreichbaren Gesamtbremskräfte ist weiter verbessert, wenn für die jeweiligen Bremseneinheiten Konstruktionsbeiwerte im Voraus ermittelt werden und bei der Schätzung der erreichbaren Teilbremskräfte vorgegeben werden.

In einer vorteilhaften Ausführungsform der Erfindung wird eine Schätzbremsung unterlassen oder abgebrochen bei Anforderung von höheren Bremskräften als einer zuvor ermittelten erreichbaren Teilbremskraft für die aktive Bremseneinheit, so dass jedenfalls sichergestellt ist, dass die angeforderte Bremskraft bereit steht. Ein Unterlassen oder Abbrechen einer Schätzbremsung erfolgt vorteilhaft in Abhängigkeit einer Betrachtung des aktuellen Radschlupfs an der aktiven Bremseneinheit, wobei als Kriterium für die Durchführung von Schätzbremsungen ein Schwellwert für den Radschlupf vorgegeben ist, beispielsweise sieben Prozent. Überschreitet der Radschlupf den vorgegebenen Schwellwert, so wird zur Verzögerung des Nutzfahrzeugs beziehungsweise der Fahrzeugkombination die gesamte zur Verfügung stehende Bremsanlage eingesetzt und gewährleistet, dass Stabilitätsmaßnahmen ergriffen werden können, beispielsweise ein Antiblockiersystem eingreifen kann.

Um sicher zu stellen, dass während der Schätzbremsungen bedarfsweise möglichst rasch die Gesamtbremskraft erhöht werden kann, wird während der Schätzbremsung für eine der Bremseneinheiten an den übrigen Radbremsen der Anlegedruck eingestellt.

Die Schätzbremsungen werden für sämtliche Bremseneinheiten sukzessiv durchgeführt und wiederholt, so dass stets aktuelle Bremsenkennwerte und geschätzte Teilbremskräfte für die jeweiligen Bremseneinheiten zur Verfügung stehen, so dass stets die erreichbaren Gesamtbremskräfte, insbesondere die erreichbare Maximalbremskraft, geschätzt werden können. Die Wiederholung der Schätzbremsungen an einzelnen Bremseneinheiten erfolgt vorteilhaft nach einem vorgegebenen Wiederholungsmuster, beispielsweise periodisch bezüglich einer Reihenfolge der Bremseneinheiten. Bei der sukzessiven Durchführung der Schätzbremsungen für sämtliche Bremseneinheiten können bei der Umsetzung einer Bremsanforderung, das heißt während eines Verzögerungsvorgangs, hintereinander mehrere Schätzbremsungen durchgeführt werden. Erreicht während einer Schätzbremsung die aktive Bremseneinheit den gewünschten Betriebspunkt, so werden für den dabei anliegenden Bremsdruck sowie die dann gemessene und ermittelte Verzögerung des Fahrzeugs oder der Fahrzeugkombination die Bremsenkennwerte erfindungsgemäß ermittelt und die Teilbremskraft geschätzt. Die weitere Umsetzung der Bremskraftanforderung erfolgt dann durch eine weitere Bremseneinheit, welches hierzu allein aktiviert und von der Bremssteuereinheit angesteuert wird.

Ein Ausführungsbeispiel der Erfindung ist nachstehend anhand der Zeichnung näher erläutert. Es zeigen:

Fig. 1    ein pneumatisches und elektrisches Schema einer Bremsanlage eines Nutzfahrzeugs gemäß einem ersten Ausführungsbeispiel mit pneumatischem Betätigungssystem,

Fig. 2    eine schematische Ansicht eines zweiten Ausführungsbeispiels mit hydraulischem Betätigungssystem,

Fig.3    eine schematische Ansicht eines zweiten Ausführungsbeispiels mit hydraulischem Betätigungssystem,

Fig. 4    eine schematische Darstellung der Bremskräfte an einer Fahrzeugkombination mit mehreren Achsen,

Fig. 5    ein Flussschaubild eines Ausführungsbeispiels eines Verfahrens zur Schätzung der erreichbaren Gesamtbremskräfte in einer Fahrzeugkombination gemäß Fig. 4.

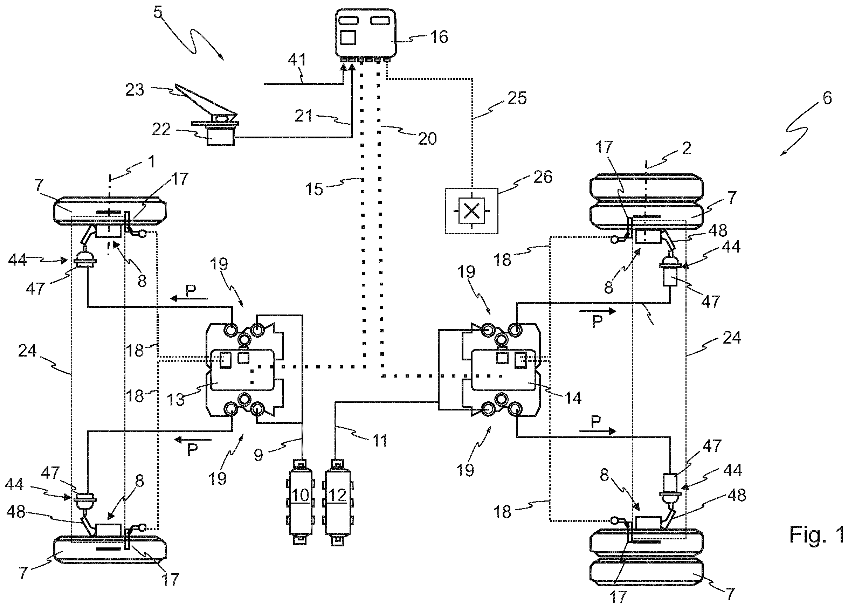

Fig. 1 zeigt ein elektrisch- pneumatisches Schema einer elektronischen Bremsanlage 5 eines Nutzfahrzeugs 6. Elektrische Leitungen sind mit punktierten Linien und pneumatische Leitungen mit Volllinien dargestellt. Der Nutzfahrzeug 6 umfasst im gezeigten Ausführungsbeispiel zwei Achsen 1, 2, an denen jeweils beidseitig Räder 7 angeordnet sind. Zum Abbremsen des Nutzfahrzeugs 6 ist jedem Rad 7 eine Radbremse 8 zugeordnet. Die Radbremsen 8 sind im gezeigten Ausführungsbeispiel als Scheibenbremsen ausgeführt und werden über ein Betätigungssystem 44, 45, 46 in Betrieb genommen. Im Ausführungsbeispiel gemäß Fig. 1 weist die Bremsanlage 5 ein pneumatisches Betätigungssystem 44 auf, so dass die Radbremsen 8pneumatisch betätigbar sind und entsprechend dem anliegenden Bremsdruck P eine Bremskraft auf das sich drehende Rad 7 ausüben. Das pneumatische Betätigungssystem 44 besteht aus einem mit der Radbremse 8 verbundenen pneumatischen Bremszylinder 47 sowie dem Bremshebel 48 und einem Druckkolben, welcher im Inneren der Radbremse 8 angeordnet ist. Der Bremszylinder 47 erzeugt unter der Wirkung des über die Pneumatikleitung 49 anliegenden Stellgröße, nämlich dem Bremsdruck P, eine Betätigungskraft. Der Bremshebel 48 dient der Übertragung und Verstärkung der vom Bremszylinder 47 erzeugten Betätigungskraft.

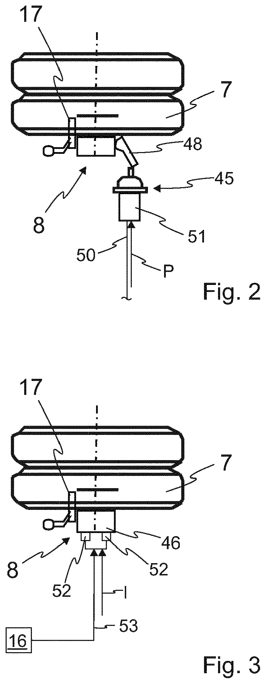

In einem zweiten Ausführungsbeispiel ist ein hydraulisches Betätigungssystem 45 vorgesehen, welches prinzipiell in Fig. 2 gezeigt ist. Dabei wird ein Bremsdruck P über eine Hydraulikleitung 50 auf einen Hydraulikzylinder 51 geschaltet, welcher hydraulisch eine dem Bremsdruck P entsprechende Betätigungskraft erzeugt.

In einem dritten Ausführungsbeispiel gemäß Fig. 3 ist ein elektromechanisches Betätigungssystem 46 vorgesehen. Das Betätigungssystem 46 umfasst einen oder mehrere elektromechanische Aktoren 52, welche den Bremskolben eines Bremszylinders ersetzen. Die Bremsbeläge werden von den Aktoren 52 entsprechend der über die elektrische Steuerleitung 53 anliegenden elektrischen Stellgröße I angepresst, nämlich bei der Scheibenbremse an die Bremsscheibe gepresst. Die Stellgröße I wird von der Bremssteuereinheit 16 analog der Bestimmung des Bremsdrucks als Stellgröße bei pneumatischer Betätigung im Ausführungsbeispiel gemäß Fig. 1 ermittelt.

Die Bremsanlage 5 weist im gezeigten Ausführungsbeispiel zwei Bremskreise auf, wobei ein erster Bremskreis 9 der in Fahrtrichtung vorn liegenden Achse 1 zugeordnet und ein zweiter Bremskreis 11 mit einem zweiten Druckmittelvorrat 12 der hinteren Achse 2 zugeordnet sind. Zur pneumatischen Betätigung der Radbremsen 8 ist im ersten Bremskreis 9 ein erster Druckmittelvorrat 10 und im zweiten Bremskreis 11 ein zweiter Druckmittelvorrat 12 angeordnet. Zur Einstellung des Bremsdrucks an den Radbremsen 8 ist im gezeigten Ausführungsbeispiel in beiden Bremskreisen jeweils ein Achsmodulator 13, 14 zugeordnet. Ein vorderer Achsmodulator 13 ist dabei über eine Signalleitung 15 mit einer Bremssteuereinheit 16 verbunden. Die Signalleitung 15 ist insbesondere eine CAN-Verbindung. Der hintere Achsmodulator 14 ist über eine Signalleitung 20 (CAN-Bus) mit der Bremssteuereinheit 16 verbunden.

An den Rädern 7 sind jeweils Drehzahlsensoren 17 angeordnet. Die Drehzahlsensoren 17 der Räder 7 der vorderen Achse 1 sind über eine elektrische Leitung 18 signalübertragend mit dem vorderen Achsmodulator 13 verbunden. Entsprechend sind die Drehzahlsensoren 17 der Räder 7 der hinteren Achse 2 mit dem hinteren Achsmodulator 14 verbunden. Im Betrieb der Bremsanlage 5 erfassen die Achsmodulatoren 13, 14 die Messwerte für die Drehzahlen der jeweiligen Räder und senden sie gegebenenfalls nach Auswertung durch eine Elektronik an die Bremssteuereinheit 16. Die Bremssteuereinheit 16 wertet die ermittelten Drehzahlen aus und passt gegebenenfalls den Bremsdruck an, welcher dem jeweiligen Achsmodulator 13, 14 vorgegeben wird.

Durch Auswertung der Drehzahlmesswerte schließt die Bremssteuereinheit 16 auf die Blockierneigung des jeweiligen Rades 5. Übersteigt die eingesteuerte Bremskraft die maximal übertragbare Bremskraft an einem oder mehreren Rädern 7, beginnen diese zu blockieren, wodurch das Nutzfahrzeug 6 instabil werden kann. Über die Drehzahlsensoren 17 überwacht demnach eine Antiblockierfunktion der Bremssteuereinheit 16 die Blockierneigung jedes Rades 7.

Die Achsmodulatoren 13, 14 verfügen hierbei im gezeigten Ausführungsbeispiel jeweils über zwei pneumatisch unabhängige Druckregelkreise mit jeweils einer Ventilanordnung 19, welche ein Einlassventil und ein Auslassventil umfassen. Bei Blockier- oder Durchdrehneigung modifiziert der jeweilige Achsmodulator 13, 14 den von der Bremssteuereinheit 16 angeforderten Bremsdruck für die jeweilige Achse 1, 2.

Die Bremssteuereinheit 16 ermittelt die Bremsdrücke P, welche an den jeweiligen Betätigungssystemen 44 auf die Radbremse 8 wirken sollen, entsprechend einer jeweils zur Verzögerung des Nutzfahrzeugs 6 angeforderten Bremskraft, das heißt einer Bremskraftanforderung 21, 41. Zum Empfang von Bremskraftanforderungen 21 ist die Bremssteuereinheit 16 mit dem Bremssignalgeber 22 verbunden, an den ein Bremspedal 23 gekoppelt ist. Das Bremspedal 23 ist in der Fahrerkabine des Nutzfahrzeugs 6 angeordnet. Bei Betätigung des Bremspedals 23 leitet der Bremssignalgeber 22 der Bremssteuereinheit 17 eine der Fahrerbremsanforderung qualitativ entsprechende Bremskraftanforderung 21 zu. Die Bremssteuereinheit 16 ist außerdem dazu ausgebildet, externe Bremskraftanforderungen 41 zu empfangen, beispielsweise von Fahrerassistenzsystemen. Insbesondere beim Platooning, wenn mehrere Nutzfahrzeuge oder Fahrzeugkombinationen miteinander vernetzt sind, empfängt die Bremssteuereinheit 16 externe Bremskraftanforderungen 41 zur automatisierten Verzögerung.

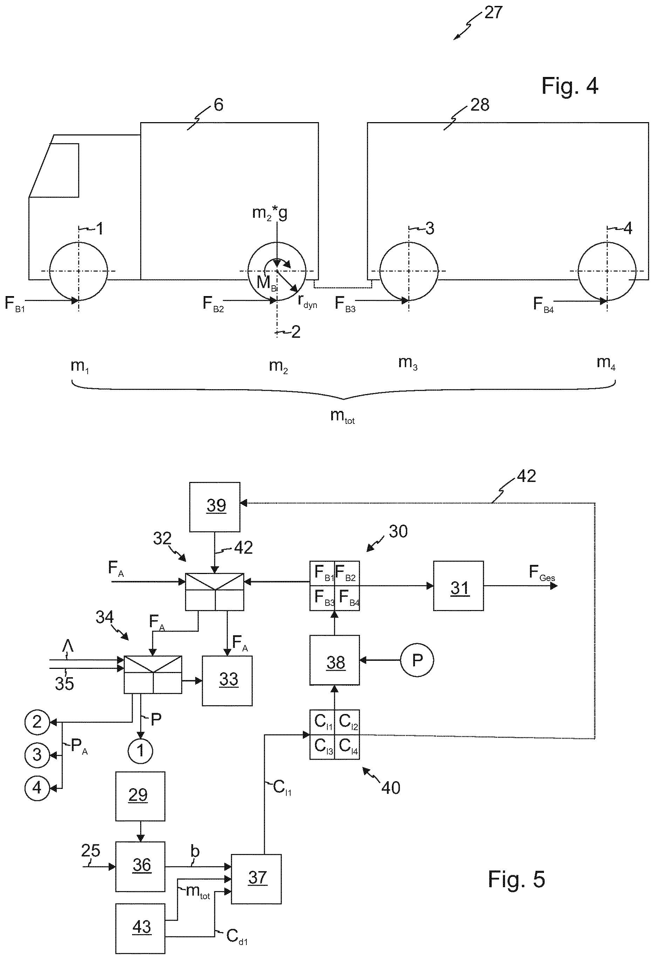

Um beim Platooning den Abstand zum vorausfahrenden Fahrzeug so gering wie möglich zu halten, werden für das Fahrzeug oder die Fahrzeugkombination die erreichbaren Gesamtkräfte zur automatisierten Verzögerung geschätzt, was nachstehend anhand von Fig. 4 und Fig. 5 näher erläutert ist. Zur Schätzung der von der Bremsanlage 5 erreichbaren Gesamtkräfte werden im laufenden Betrieb Schätzbremsungen durchgeführt, bei denen Bremseneinheiten 24 bestehend aus jeweils mindestens einer der Radbremsen 8 als jeweils allein aktive Bremseneinheit 24 die zur Verzögerung angeforderte Bremskraft wenigstens teilweise allein aufbringen. Im gezeigten Ausführungsbeispiel werden Bremseneinheiten 24 mit jeweils beiden Radbremsen 8 einer Achse als aktive Bremseneinheit 24 in Schätzbremsungen zur Umsetzung der Bremskraftanforderung 2, 41 von der Bremssteuereinheit 16 eingesetzt. Sofern die Fahrzeugstabilität nicht in Frage stehen sollte, können auch einzelne Radbremsen für die Zwecke der Schätzbremsungen als allein aktive Bremseneinheit eingesetzt werden, sodass lediglich eine Radbremse 8 Bremskräfte aufbringt. In Ausführungsbeispielen, in denen mehrere Achsen einem gemeinsamen Bremskreis zugeordnet sind, werden Schätzbremsungen für Bremseneinheiten mit den Radbremsen 8 mehrerer Achsen des gemeinsamen Bremskreises durchgeführt.

Während der Schätzbremsungen wird aus Messwerten 25 die aktuelle Verzögerung des Nutzfahrzeugs 6 oder der Fahrzeugkombination 27 bestimmt. Hierfür ist der Bremssteuereinheit 16 ein Beschleunigungssensor 26 zugeordnet. Alternativ bestimmt die Bremssteuereinheit 16 die aktuelle Verzögerung aus den Drehzahlmesswerten der Drehzahlsensoren 17.

Das erfindungsgemäße Verfahren zur Schätzung der erreichbaren Gesamtbremskräfte ist nachstehend anhand eines Ausführungsbeispiels einer Fahrzeugkombination 27 gemäß Fig. 4 erläutert, welche aus einem Nutzfahrzeug 6 mit zwei Achsen 1, 2 und einem Anhängefahrzeug 28 mit ebenfalls zwei Achsen 3, 4 besteht. Die Fahrzeugkombination 27 umfasst somit vier Achsen 1, 2, 3, 4, welche jeweils Teilbremskräfte $F_{B1}$, $F_{B2}$, $F_{B3}$, $F_{B4}$ aufbringen können. Die Gesamtmasse $m_{tot}$ ist dabei abhängig vom Beladungszustand der Fahrzeugkombination 27 aufgeteilte in Achslasten ($m_1$, $m_2$, $m_3$, $m_4$). Die jeweilige Teilbremskraft $F_{B1}$, $F_{B2}$, $F_{B3}$, $F_{B4}$ lässt sich als Quotient aus dem jeweils wirkenden Bremsmoment $M_B$ und dem jeweiligen dynamischen Rollradius $r_{dyn}$ beschreiben, entsprechend der Formel

$$F_B = M_B \ / \ r_{dyn}.$$

Das Bremsmoment ist dabei proportional zu dem jeweils anliegenden Bremsdruck.

Zur Schätzung der zur automatisierten Verzögerung erreichbaren Gesamtbremskräfte $F_{Ges}$ (Fig. 5) werden für einzelne Bremseneinheiten Schätzbremsungen 29 durchgeführt, bei denen jeweils die erreichbare Teilbremskraft für die betreffende Bremseneinheit 24 geschätzt wird. Die erreichbaren Teilbremskräfte werden in separaten Schätzbremsungen 29 ermittelt und in einer Bremskrafttabelle 30 zusammengestellt, wobei die Summe 31 der aktuell erreichbaren Teilbremskräfte als erreichbare Gesamtbremskraft $F_{Ges}$ angenommen wird. Die Schätzbremsungen werden laufend nacheinander durchgeführt und zyklisch wiederholt, so dass in der Bremskrafttabelle 30 stets aktuelle Werte für die erreichbaren Teilbremskräfte zur Verfügung stehen.

Wie Fig. 5 zeigt, erfolgt in einem ersten Schritt eine Auswahl 39 einer Bremseneinheit, für welches die nächste Schätzbremsung 29 durchgeführt werden soll. Die Auswahl 39 erfolgt nach einer zyklisch wiederholten Reihenfolge 42, so dass nach Abschluss einer Schätzbremsung für eine weitere Achse eine Schätzbremsung 29 durchgeführt wird. Im Ausführungsbeispiel gemäß Fig. 5 wird die vordere Achse 1 des Nutzfahrzeugs 6 ausgewählt, so dass während der Schätzbremsung 29 die angeforderte Bremskraft $F_A$ allein durch die aktive Bremseneinheit mit den Radbremsen der Achse 1 umgesetzt wird. Während an der für die Schätzbremsung 29 ausgewählten Bremseneinheit der Achse 1 der zur Umsetzung der Bremsanforderung passende Bremsdruck P wirkt, wird an den Betätigungssystemen 44, 45 der übrigen Radbremsen 8 der Achsen 2, 3, 4 Anlegedruck $P_A$ eingestellt. Eine Schätzbremsung 29 wird unterlassen oder abgebrochen, bei Anforderung von höheren Bremskräften als einer zuvor ermittelten erreichbaren Teilbremskraft für die aktive Bremseneinheit. Dies ist im Schaubild gemäß Fig. 5 durch einen Vergleichsschritt 32 repräsentiert, bei dem die angeforderte Bremskraft $F_A$ mit dem zuletzt in der Bremskrafttabelle 30 abgelegten Wert für die erreichbare Teilbremskraft $F_{B1}$ für die Bremseneinheit der Achse 1 durchgeführt wird. Ist die angeforderte Bremskraft $F_A$ für die aktive Bremseneinheit nicht erreichbar, so erfolgt eine Normalbremsung 33 mit mehreren Radbremsen, insbesondere durch sämtliche Radbremsen der Bremsanlage. Ferner ist die Durchführung der Schätzbremsung 29 im gezeigten Ausführungsbeispiel abhängig von einer Bewertung 34 des Radschlupfs λ der aktiven Bremseneinheit. Übersteigt der aktuelle Radschlupf λ einen vorgegebenen Schwellwert 35 von beispielsweise sieben Prozent, so wird die vorgesehene Schätzbremsung 29 unterlassen oder abgebrochen und die angeforderte Bremskraft $F_A$ durch alle Bremseneinheiten umgesetzt (Normalbremsung 33).

Während der Schätzbremsung 29 erreichen die Radbremsen der aktiven Bremseneinheit einen hohen Betriebspunkt durch die alleinige Umsetzung der angeforderten Bremskraft. In dem konkreten Betriebspunkt mit einem bekannten Bremsdruck P erfolgt anhand des aktuellen Messwerts 25 eine Bestimmung 36 der aktuellen Verzögerung b. Mit Kenntnis der aktuell vorliegenden Verzögerung und des korrespondieren Bremsdrucks, der eingestellt ist, erfolgt eine Ermittlung 37 eines Bremsenkennwerts $c_{L1}$, welcher das Verhältnis der (gesuchten) Teilbremskraft $F_{B1}$, $F_{B2}$, $F_{B3}$, $F_{B4}$ und dem dafür eingestellten Bremsdruck P repräsentiert. Da das Bremsmoment proportional ist zu dem anliegenden Bremsdruck lässt sich unter Berücksichtigung der aktuellen Verzögerung b ein Rückschluss auf den Proportionalitätsfaktor in dem Verhältnis von Bremsmoment und Bremsdruck schließen. Die Proportionalität wird dabei im Wesentlichen von dem Bremsenkennwert $c_{L1}$ bestimmt. Dieser Bremsenkennwert $c_{L1}$ wird alternativ unter Berücksichtigung der aktuellen Verzögerung b sowie einer ermittelten oder vorgegebenen Gesamtmasse $m_{tot}$ des Nutzfahrzeugs oder der Fahrzeugkombination ermittelt. Die Gesamtmasse $m_{tot}$ wird durch entsprechende Messwerte bereitgestellt.

Der Bremsenkennwert für die Bremseneinheit der vorderen Achse 1 des Zugfahrzeugs wird somit gemäß der folgenden Formel ermittelt:

$$C_{L1} = v \times m_{tot} \times r_{dyn} / p \times c_{D1}.$$

In dem vorgenannten Zusammenhang ist allein der Bremsenkennwert $C_{L1}$, welcher die Performance bzw. die Leistungsfähigkeit der Bremseneinheit repräsentiert, variabel. Der Konstruktionsbeiwert $C_{D1}$ ist geometrisch festgelegt und ändert sich mit fortschreitender Betriebszeit des Fahrzeugs nicht. Er kann daher im Voraus bestimmt und der Ermittlung des Bremsenkennwerts $C_{L1}$ vorgegeben werden. Die Ermittlung 37 des Bremsenkennwerts $c_{L1}$, berücksichtigt somit Vorgaben 43 zur aktuellen Gesamtmasse $m_{tot}$ sowie zum entsprechenden Konstruktionsbeiwert $C_{D1}$.

Mit dem aktuell während der Schätzbremsung 29 ermittelten Bremsenkennwert $C_{L1}$ wird ein Rückschluss 38 auf die erreichbare Teilbremskraft $F_{B1}$ für jedes einstellbare Niveau des Bremsdrucks P gezogen, gemäß der folgenden Beziehung:

$$F_{B1} = P \times C_{D1} \times C_{L1} / r_{dyn,1}$$

Dabei wird bei dem Rückschluss 38 auf die von der aktiven Bremseneinheit erreichbaren Teilbremskräfte der Konstruktionsbeiwert $C_{D,1}$ der aktiven Bremseneinheit sowie deren dynamischer Rollradius $r_{dyn,1}$ herangezogen.

Dementsprechend werden in aufeinander folgenden Schätzbremsungen 29 Bremsenkennwerte $c_{L1}$, $c_{L2}$, $c_{L3}$, $c_{L4}$ für die weiteren Bremseneinheiten, das heißt im Ausführungsbeispiel achsweise für die weiteren Achsen der Fahrzeugkombination 27 (Fig. 4) ermittelt.

Die Schätzbremsungen 29 werden im Betrieb des Fahrzeugs, beziehungsweise der Fahrzeugkombination, zeitdiskret nacheinander durchgeführt, beispielsweise bei unterschiedlichen Bremsvorgängen. Zusätzlich können aber auch bei Vorliegen entsprechend quan-

titativer Bremskraftanforderungen auch mehrere Schätz- bremsungen 29 für unterschiedliche Bremseneinheiten zur Umsetzung derselben Bremskraftanforderung erfolgen, wobei nach Abschluss der Schätzbremsung 29 für eine erste Bremseneinheit anschließend für eine weitere Schätzbremsung 29 eine andere Bremseneinheit alleine Bremskraft aufbringt. Während der Schätzbremsungen 29 für eine der Bremseneinheiten wird an den übrigen Radbremsen jeweils Anlegedruck eingestellt, so dass bedarfsweise rasch Bremskraft zugeschaltet werden kann, beziehungsweise das Bremspotential der gesamten Bremsanlage zur Umsetzung entsprechender Bremsanforderungen zur Verfügung steht.

Im gezeigten Ausführungsbeispiel werden die in unterschiedlichen Schätzbremsungen ermittelten Bremsenkennwerte $c_{L1}$, $c_{L2}$, $c_{L3}$, $c_{L4}$ in einer Kennwerttabelle 40 abgelegt und für die Zusammenstellung der Bremskrafttabelle 30 bereit gestellt, in welcher die erreichbaren Teilbremskräfte $F_{B1}$, $F_{B2}$, $F_{B3}$, $F_{B4}$ in Abhängigkeit des Bremsdruck P zusammengestellt sind. Die Kennwerttabelle 40 wird mit fortlaufender Durchführung von Schätzbremsungen 29 stets aktualisiert.

Im Ausführungsbeispiel mit elektromechanischer Betätigung wird bei den beschriebenen Schritten anstelle des Bremsdrucks P eine elektrische Stellgröße I (Fig. 3) herangezogen.

Bezugszeichenliste (Bestandteil der Beschreibung)

1. Achse
2. Achse
3. Achse
4. Achse
5. Bremsanlage
6. Nutzfahrzeug
7. Rad
8. Radbremse
9. Erster Bremskreis
10. Erster Druckmittelvorrat
11. Zweiter Bremskreis
12. Zweiter Druckmittelvorrat
13. Vorderer Achsmodulator
14. Hinterer Achsmodulator
15. Signalleitung (CAN)
16. Bremssteuereinheit
17. Drehzahlsensor
18. Leitung
19. Ventilanordnung
20. Signalleitung (CAN)
21. Bremskraftanforderung
22. Bremssignalgeber
23. Bremspedal
24. Bremseneinheit
25. Messwert
26. Beschleunigungssensor
27. Fahrzeugkombination

28. Anhängefahrzeug
29. Schätzbremsung
30. Bremskrafttabelle
31. Summe
32. Vergleich
33. Normalbremsung
34. Bewertung
35. Schwellwert
36. Bestimmung
37. Ermittlung
38. Rückschluss
39. Auswahl
40. Kennwerttabelle
41. Externe Bremskraftanforderung
42. Reihenfolge
43. Vorgabe
44. Betätigungssystem (pneumatisch)
45. Betätigungssystem (hydraulisch)
46. Betätigungssystem (elektromechanisch)
47. Pneumatischer Bremszylinder
48. Bremshebel
49. Pneumatikleitung
50. Hydraulikleitung
51. Hydraulikzylinder
52. Elektromechanischer Aktor
53. Elektrische Steuerleitung
$F_{B1}$ - $F_{B4}$ Teilbremskraft
$m_{tot}$ Gesamtmasse
$m_1$ - $m_4$ Achslasten
$\lambda$ Schlupf
$M_B$ Bremsmoment
$C_{L1}$ - $C_{L4}$ Bremsenkennwert
$C_{D1}$ Konstruktionsbeiwert
$r_{dyn}$ dynamischer Rollradius
P Stellgröße Bremsdruck
$P_A$ Anlegedruck
I elektrische Stellgröße
b aktuelle Verzögerung
$F_{Ges}$ Gesamtbremskraft

## Patentansprüche

1.    Verfahren zur Schätzung der erreichbaren Gesamtbremskräfte ($F_{Ges}$) zur automatisierten Verzögerung eines Nutzfahrzeugs (6) oder einer Fahrzeugkombination (27) mit mehreren Achsen (1, 2, 3, 4), wobei Teilbremskräfte ($F_{B1}$, $F_{B2}$, $F_{B3}$, $F_{B4}$) über eine Stellgröße (P, I) an der jeweiligen Radbremse (8) eingestellt werden, wobei Bremseneinheiten (24) bestehend aus mindestens einer der Radbremsen (8) in Schätzbremsungen (29) als jeweils allein aktive Bremseneinheit (24) eine jeweils zur Verzögerung angeforderte Bremskraft ($F_A$) wenigstens teilweise aufbringen, dabei aus Messwerten (25) die aktuelle Verzögerung (b) bestimmt wird und ein Bremsenkennwert ($C_{L1}$, $C_{L2}$, $C_{L3}$, $C_{L4}$) der aktiven Bremseneinheit (24), welcher das Verhältnis der Teilbremskraft ($F_{B1}$, $F_{B2}$, $F_{B3}$, $F_{B4}$) und der dafür eingestellten Stellgröße (P, I) repräsentiert, unter Berücksichtigung der aktuellen Verzögerung (b) sowie einer ermittelten oder vorgegebenen Gesamtmasse ($m_{tot}$) des Nutzfahrzeugs (6) oder der Fahrzeugkombination (27) ermittelt wird, und wobei aus dem ermittelten Bremsenkennwert ($C_{L1}$, $C_{L2}$, $C_{L3}$, $C_{L4}$) ein Rückschluss (38) auf die von der jeweiligen Bremseneinheit (24) erreichbaren Teilbremskräfte ($F_{B1}$, $F_{B2}$, $F_{B3}$, $F_{B4}$) gezogen wird und die erreichbaren Gesamtbremskräfte ($F_{Ges}$) als Summe (31) der erreichbaren Teilbremskräfte ($F_{B1}$, $F_{B2}$, $F_{B3}$, $F_{B4}$) geschätzt werden, **dadurch gekennzeichnet, dass** während der Schätzbremsungen (29) für eine der Bremseneinheiten (24) an den Betätigungssystemen (44, 45) der übrigen Radbremsen (8) Anlegedruck (PA) eingestellt wird.

2. Verfahren nach Anspruch 1,
 **dadurch gekennzeichnet, dass**
 bei der Ermittlung (37) des Bremsenkennwerts ($C_{L1}$, $C_{L2}$, $C_{L3}$, $C_{L4}$) ein vorgegebener Konstruktionsbeiwert ($C_D$) der aktiven Bremseneinheit (24) berücksichtigt wird.

3. Verfahren nach einem der vorhergehenden Ansprüche,
 **dadurch gekennzeichnet, dass**
 die Bremsenkennwerte ($C_{L1}$, $C_{L2}$, $C_{L3}$, $C_{L4}$) für Bremseneinheiten (24) mit Radbremsen (8) einzelner Achsen (1, 2, 3, 4) oder Gruppen von Achsen (1, 2, 3, 4) ermittelt werden.

4. Verfahren nach einem der vorhergehenden Ansprüche,
 **dadurch gekennzeichnet, dass**
 eine Schätzbremsung (29) unterlassen oder abgebrochen wird, bei Anforderungen von höheren Bremskräften ($F_A$) als einer zuvor ermittelten erreichbaren Teilbremskraft ($F_{B1}$, $F_{B2}$, $F_{B3}$, $F_{B4}$) für die betreffende Bremseneinheit (24).

5. Verfahren nach einem der vorhergehenden Ansprüche,
 **dadurch gekennzeichnet, dass**
 die Schätzbremsungen (29) für sämtliche Bremseneinheiten (24) sukzessiv durchgeführt und wiederholt werden.

6. Verfahren nach einem der vorhergehenden Ansprüche,
 **dadurch gekennzeichnet, dass**
 die Radbremsen (8) pneumatisch betätigt werden und Teilbremskräfte ($F_{B1}$, $F_{B2}$, $F_{B3}$, $F_{B4}$) über die Stellgröße des jeweiligen Bremsdrucks (P) eingestellt werden.

7. Verfahren nach einem der vorhergehenden Ansprüche,
 **dadurch gekennzeichnet, dass**
 die aktuelle Verzögerung (b) aus Messwerten (25) von Drehzahlsensoren (17) der Radbremsen (8) ermittelt wird.

8. Bremsanlage (5) zur Durchführung des Verfahrens nach einem der Ansprüche 1 bis 7, mit pro Rad (7) eines Nutzfahrzeugs (6) oder einer Fahrzeugkombination (27) einer Radbremse (8) zur Einstellung von Teilbremskräften ($F_{B1}$, $F_{B2}$, $F_{B3}$, $F_{B4}$) über eine Stellgröße (P, I), mit einer elektronischen Bremssteuereinheit (16) zur automatisierten Verzögerung sowie wenigstens einem der Bremssteuereinheit (16) zur Ermittlung der aktuellen Verzögerung (b) zugeordneten Sensor (17, 26), wobei die Bremssteuereinheit (16) dazu ausgebildet ist, Bremseneinheiten (24) bestehend aus mindestens einer der Radbremsen (8) während Schätzbremsungen (29) allein zur wenigstens teilweisen Aufbringung einer angeforderten Bremskraft ($F_A$) zu aktivieren, einen Bremsenkennwert ($C_{L1}$, $C_{L2}$, $C_{L3}$, $C_{L4}$) der aktiven Bremseneinheit (24), welcher das Verhältnis der Teilbremskraft ($F_{B1}$, $F_{B2}$, $F_{B3}$, $F_{B4}$) und der dafür eingestellten Stellgröße (P, I) repräsentiert, unter Berücksichtigung der aktuellen Verzögerung (b) sowie einer ermittelten oder vorgegebenen Gesamtmasse ($m_{tot}$) des Nutzfahrzeugs (6) oder der Fahrzeugkombination (27) zu ermitteln, aus dem ermittelten Bremsenkennwert ($C_{L1}$, $C_{L2}$, $C_{L3}$, $C_{L4}$) einen Rückschluss (38) auf die von der jeweiligen Bremseneinheit (24) erreichbaren Teilbremskräfte ($F_{B1}$, $F_{B2}$, $F_{B3}$, $F_{B4}$) zu ziehen und die erreichbaren Gesamtbremskräfte ($F_{Ges}$) als Summe (31) der erreichbaren Teilbremskräfte ($F_{B1}$, $F_{B2}$, $F_{B3}$, $F_{B4}$) zu schätzen, **dadurch gekennzeichnet, dass** während der Schätzbremsungen (29) für eine der Bremseneinheiten (24) an den Betätigungssystemen (44, 45) der übrigen Radbremsen (8) Anlegedruck (PA) eingestellt wird.

9. Bremsanlage nach Anspruch 8,
 **gekennzeichnet durch** ein pneumatisches Betätigungssystem (44) der Radbremsen (8), wobei Teilbremskräfte ($F_{B1}$, $F_{B2}$, $F_{B3}$, $F_{B4}$) über die Stellgröße des jeweiligen Bremsdrucks (P) im Betätigungssystem (44) eingestellt werden.

10. Nutzfahrzeug (6) oder Fahrzeugkombination (27) mit einer Bremsanlage (5) nach Anspruch 8 oder 9 zur Durchführung des Verfahrens nach einem der Ansprüche 1 bis 7.

**Claims**

1. A method for estimating the achievable total braking forces ($F_{Ges}$) for the automated deceleration of a utility vehicle (6) or of a vehicle combination (27) having a plurality of axles (1, 2, 3, 4), wherein partial braking forces ($F_{B1}$, $F_{B2}$, $F_{B3}$, $F_{B4}$) are set by means of a manipulated variable (P, I) at the respective wheel brake (8), wherein brake units (24) consisting of at least one of the wheel brakes (8) in estimation braking operations (29) at least partially apply a braking force ($F_A$) required for deceleration, each as the only active brake unit (24), the current delay (b) being determined from measurement values (25) and a braking parameter ($C_{L1}$, $C_{L2}$, $C_{L3}$, $C_{L4}$) of the active brake unit (24) which represents the ratio of the partial braking forces ($F_{B1}$, $F_{B2}$, $F_{B3}$, $F_{B4}$) and the manipulated variable (P, I) set therefore, in consideration of the current deceleration (b) as well as a determined or predefined total mass ($m_{tot}$) of the utility vehicle (6) or of the vehicle combination (27), and wherein a conclusion (38) about the partial braking forces ($F_{B1}$, $F_{B2}$, $F_{B3}$, $F_{B4}$) achievable by the respective brake unit (24) is drawn from the determined braking parameter ($C_{L1}$, $C_{L2}$, $C_{L3}$, $C_{L4}$) and the achievable total braking forces ($F_{Ges}$) are estimated as a sum (31) of the achievable partial braking forces ($F_{B1}$, $F_{B2}$, $F_{B3}$, $F_{B4}$), **characterized in that**, during the estimation braking operations (29) application pressure (PA) is set for one of the brake units (24) at the activation systems (44, 45) of the remaining brake wheels (8).

2.  The method according to claim 1,
    **characterized in that**
    in the determination (37) of the braking parameter ($C_{L1}$, $C_{L2}$, $C_{L3}$, $C_{L4}$) a predefined design factor ($C_D$) of the active brake unit (24) is taken into consideration.

3.  The method according to any of the foregoing claims,
    **characterized in that**
    the braking parameters ($C_{L1}$, $C_{L2}$, $C_{L3}$, $C_{L4}$) are determined for brake units (24) with wheel brakes (8) of individual axles (1, 2, 3, 4) or groups of axles (1, 2, 3, 4).

4.  The method according to any of the foregoing claims,
    **characterized in that**
    an estimation braking operation (29) is omitted or aborted in the event of requests of higher braking forces ($F_A$) than a previously determined achievable partial braking force ($F_{B1}$, $F_{B2}$, $F_{B3}$, $F_{B4}$) for the relevant brake unit (24).

5.  The method according to any of the foregoing claims,
    **characterized in that**
    the estimation braking operations (29) are successively carried out and repeated for all brake units (24).

6.  The method according to any of the foregoing claims,
    **characterized in that**

the wheel brakes (8) are pneumatically activated and partial braking forces ($F_{B1}$, $F_{B2}$, $F_{B3}$, $F_{B4}$) are set by means of the manipulated variable of the respective brake pressure (P).

7.  The method according to any of the foregoing claims,
    **characterized in that**
    the current deceleration (b) is determined from measurement values (25) by rotational speed sensors (17) of the wheel brakes (8).

8.  A braking system (5) for carrying out the method according to any of claims 1 to 7, having a wheel brake (8) per wheel (7) of a utility vehicle (6) or of a vehicle combination (27) for setting partial braking forces ($F_{B1}$, $F_{B2}$, $F_{B3}$, $F_{B4}$) by means of a manipulated variable (P, I), having an electronic brake control unit (16) for automated deceleration as well as at least one sensor (17, 26) assigned to the brake control unit (16) for determining the current deceleration (b), wherein the brake control unit (16) is embodied to activate brake units (24) consisting of at least one of the wheel brakes (8) during estimation braking operations (29) for at least partial application of a requested braking force ($F_A$), to determine a braking parameter ($C_{L1}$, $C_{L2}$, $C_{L3}$, $C_{L4}$) of the active brake unit (24) which represents the ratio of the partial braking forces ($F_{B1}$, $F_{B2}$, $F_{B3}$, $F_{B4}$) and the manipulated variable (P, I) set therefore, in consideration of the current deceleration (b) as well as a determined or predefined total mass ($m_{tot}$) of the utility vehicle (6) or of the vehicle combination (27), to draw a conclusion (38) about the partial braking forces ($F_{B1}$, $F_{B2}$, $F_{B3}$, $F_{B4}$) achievable by the respective brake unit (24) from the determined braking parameter ($C_{L1}$, $C_{L2}$, $C_{L3}$, $C_{L4}$) and to estimate the achievable total braking forces ($F_{Ges}$) as a sum (31) of the achievable partial braking forces ($F_{B1}$, $F_{B2}$, $F_{B3}$, $F_{B4}$), **characterized in that**, during the estimation braking operations (29) application pressure (PA) is set for one of the brake units (24) at the activation systems (44, 45) of the remaining brake wheels (8).

9.  The braking system according to claim 8,
    **characterized by** a pneumatic activation system (44) of the brake wheels (8), wherein partial braking forces ($F_{B1}$, $F_{B2}$, $F_{B3}$, $F_{B4}$) are set by means of the manipulated variable of the respective brake pressure (P) in the activation system (44).

10. A utility vehicle (6) or vehicle combination (27) having a braking system (5) according to claim 8 or 9 for carrying out the method according to any of claims 1 to 7.

## Revendications

1. Procédé destiné à estimer les forces de freinage totales ($F_{Ges}$) atteignables pour une décélération automatisée d'un véhicule utilitaire (6) ou d'un ensemble de véhicules (27) avec plusieurs axes (1, 2, 3, 4), dans lequel des forces de freinage partielles ($F_{B1}$, $F_{B2}$, $F_{B3}$, $F_{B4}$) sont réglées au niveau du frein de roue (8) respectif via une grandeur réglante (P, I), dans lequel des unités de freinage (24) constituées d'au moins un des freins de roue (8) appliquent au moins partiellement dans des freinages estimés (29) et en tant qu'unité de freinage (24) respectivement seule active une force de freinage ($F_A$) requise pour la décélération, ce faisant la décélération en cours (b) est déterminée à partir de valeurs de mesure (25) et un facteur de frein ($C_{L1}$, $C_{L2}$, $C_{L3}$, $C_{L4}$) de l'unité de freinage (24), lequel représente le rapport entre la force de freinage partielle ($F_{B1}$, $F_{B2}$, $F_{B3}$, $F_{B4}$) et la grandeur réglante (P, I) réglée à cet effet, est établi en tenant compte de la décélération en cours (b) ainsi que d'une masse totale ($m_{tot}$) établie ou prédéfinie du véhicule utilitaire (6) ou de l'ensemble de véhicules (27), et dans lequel une conclusion (38) sur les forces de freinage partielles ($F_{B1}$, $F_{B2}$, $F_{B3}$, $F_{B4}$) atteignables par l'unité de freinage (24) respective est tirée à partir du facteur de frein ($C_{L1}$, $C_{L2}$, $C_{L3}$, $C_{L4}$) établi et les forces de freinage totales ($F_{Ges}$) atteignables sont estimées en tant que somme (31) des forces de freinage partielles ($F_{B1}$, $F_{B2}$, $F_{B3}$, $F_{B4}$) atteignables, **caractérisé en ce que** pendant les freinages estimés (29) pour l'une des unités de freinage (24) une pression d'application (PA) est réglée au niveau des systèmes d'actionnement (44, 45) des freins de roue (8) restants.

2. Procédé selon la revendication 1, **caractérisé en ce que** lors de l'établissement (37) du facteur de frein ($C_{L1}$, $C_{L2}$, $C_{L3}$, $C_{L4}$) est pris en compte un coefficient de construction ($C_D$) prédéfini de l'unité de freinage (24) active.

3. Procédé selon l'une des revendications précédentes, **caractérisé en ce que** sont établis les facteurs de frein ($C_{L1}$, $C_{L2}$, $C_{L3}$, $C_{L4}$) pour des unités de freinage (24) avec des freins de roue (8) d'axes (1, 2, 3, 4) individuels ou de groupes d'axes (1, 2, 3, 4).

4. Procédé selon l'une des revendications précédentes, **caractérisé en ce que** un freinage estimé (29) est omis ou interrompu lorsque sont requises des forces de freinage ($F_A$) supérieures à une force de freinage partielle ($F_{B1}$, $F_{B2}$, $F_{B3}$, $F_{B4}$) atteignable précédemment établie pour l'unité de freinage (24) concernée.

5. Procédé selon l'une des revendications précédentes, **caractérisé en ce que** les freinages estimés (29) sont exécutés et répétés successivement pour toutes les unités de freinage (24).

6. Procédé selon l'une des revendications précédentes, **caractérisé en ce que** les freins de roue (8) sont actionnés pneumatiquement et des forces de freinage partielles ($F_{B1}$, $F_{B2}$, $F_{B3}$, $F_{B4}$) sont réglées via la grandeur réglante de la pression de freinage (P) respective.

7. Procédé selon l'une des revendications précédentes, **caractérisé en ce que** la décélération en cours (b) est établie à partir de valeurs de mesure (25) de capteurs de vitesse de rotation (17) des freins de roue (8).

8. Dispositif de freinage (5) pour exécuter le procédé selon l'une des revendications 1 à 7, avec un frein de roue (8) par roue (7) d'un véhicule utilitaire (6) ou d'un ensemble de véhicules (27) pour régler des forces de freinage partielles ($F_{B1}$, $F_{B2}$, $F_{B3}$, $F_{B4}$) via une grandeur réglante (P, I), avec une unité de commande de freinage (16) électronique pour une décélération automatisée ainsi qu'au moins un capteur (17, 26) attribué à l'unité de commande de freinage (16) pour une détermination de la décélération en cours (b), dans lequel l'unité de commande de freinage (16) est conçue pour activer seules des unités de freinage (24) constituées d'au moins l'un des freins de roue (8) pendant des freinages estimés (29) pour une application au moins partielle d'une force de freinage ($F_A$) requise, pour établir un facteur de frein ($C_{L1}$, $C_{L2}$, $C_{L3}$, $C_{L4}$) de l'unité de freinage (24) active, lequel représente le rapport entre la force de freinage partielle ($F_{B1}$, $F_{B2}$, $F_{B3}$, $F_{B4}$) et la grandeur réglante (P, I) réglée à cet effet, en tenant compte de la décélération en cours (b) ainsi que d'une masse totale ($m_{tot}$) établie ou prédéfinie du véhicule utilitaire (6) ou de l'ensemble de véhicules (27), pour tirer une conclusion (38) à partir du facteur de frein ($C_{L1}$, $C_{L2}$, $C_{L3}$, $C_{L4}$) établi sur les forces de freinage partielles ($F_{B1}$, $F_{B2}$, $F_{B3}$, $F_{B4}$) atteignables par l'unité de freinage (24) respective et pour estimer les forces de freinage totales ($F_{Ges}$) atteignables en tant que somme (31) des forces de freinage partielles ($F_{B1}$, $F_{B2}$, $F_{B3}$, $F_{B4}$) atteignables, **caractérisé en ce que** pendant les freinages estimés (29) pour l'une des unités de freinage (24) une pression d'application (PA) est réglée au niveau des systèmes d'actionnement (44, 45) des freins de roue (8) restants.

9. Dispositif de freinage selon la revendication 8, **caractérisé par** un système d'actionnement (44) pneumatique des freins de roue (8), dans lequel des forces de freinage partielles ($F_{B1}$, $F_{B2}$, $F_{B3}$, $F_{B4}$) sont réglées dans le système d'actionnement (44) via la grandeur réglante de la pression de freinage (P) respective.

10. Véhicule utilitaire (6) ou ensemble de véhicules (27) avec un dispositif de freinage (5) selon la revendication 8 ou 9 pour exécuter le procédé selon l'une des revendications 1 à 7.

Fig. 1

EP 3 625 094 B1

Fig. 2

Fig. 3

Fig. 4

Fig. 5

EP 3 625 094 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008061944 A1
- US 5415466 A
- DE 4310422 A1
- DE 19517708 A1
- DE 3909588 A